## Europäisches Patentamt

## European Patent Office

## Office européen des brevets

(19)

(11) Numéro de publication: **0 250 311 B1**

(12)

# FASCICULE DE BREVET EUROPEEN

(45) Date de publication du fascicule du brevet:
**17.10.90**

(51) Int. Cl.⁵: **C03B 23/025**

(21) Numéro de dépôt: **87401344.4**

(22) Date de dépôt: **16.06.87**

(54) Procédé et dispositif pour le bombage de feuilles de verre.

(30) Priorité: **20.06.86 FR 8608912**

(43) Date de publication de la demande:
**23.12.87 Bulletin 87/52**

(45) Mention de la délivrance du brevet:
**17.10.90 Bulletin 90/42**

(84) Etats contractants désignés:
**BE DE ES FR GB IT SE**

(56) Documents cités:
**EP-A- 0 169 770**
**GB-A- 814 995**
**GB-A- 1 157 090**
**US-A- 2 003 383**

(73) Titulaire: **SAINT-GOBAIN VITRAGE INTERNATIONAL, 18, avenue d'Alsace, F-92400 Courbevoie(FR)**

(72) Inventeur: **Boulet, Pierre, 86 rue R.Richard, Janville 60150 Thourotte(FR)**
Inventeur: **Durussel, Philippe, Grande rue, Quesmy 60640 Guiscard(FR)**
Inventeur: **Mehl, François, 370 Domaine du Chateau, Lewarde 59287 Guesnain(FR)**

(74) Mandataire: **Muller, René et al, SAINT-GOBAIN RECHERCHE 39, quai Lucien Lefranc, F-93304 Aubervilliers(FR)**

ACTORUM AG

## Description

La présente invention concerne un procédé et un dispositif de cintrage ou le bombage de feuilles de verre selon les préambules des revendications indépendantes et en particulier le cintrage sur une forme de bombage ou configuration évidée désignée communément par cadre ou squelette de bombage.

Le bombage des feuilles de verre sur squelette est une technique communément employée pour bomber les feuilles de verre et en particulier pour bomber simultanément les deux feuilles de verre destinées à former un vitrage feuilleté bombé tel un pare-brise de véhicule de transport. Dans cette technique, les deux feuilles de verre posées l'une sur l'autre avec interposition d'un agent de séparation adéquat, sont supportées le long de leurs parties d'extrémités marginales d'une façon sensiblement horizontale par un cadre ayant le profil désiré, c'est-à-dire le profil correspondant à celui définitif des deux feuilles de verre bombées. Ainsi supportées, les deux feuilles de verre passent dans un four tunnel de bombage ayant des zones de températures différentes.

La première de ces zones est une zone de préchauffage dans laquelle les feuilles de verre sont chauffées jusqu'à une température du verre sensiblement proche du point de ramollissement. La zone suivante est la zone de bombage où les feuilles de verre portées à une température d'environ 600°C vont se cintrer progressivement par gravité pour épouser finalement la forme du cadre. Les feuilles de verre sont ensuite refroidies pour être à la sortie du four tunnel retirées du cadre de formage.

Ce procédé de bombage sur squelette donne entière satisfaction surtout lorsque les courbures ne sont pas très accentuées et/ou lorsque le bombage est essentiellement cylindrique. Lorsque les courbures sont plus accentuées et en particulier au voisinage de la périphérie des vitrages, il peut se produire ce que l'on appelle un contre bombage aux coins des feuilles de verre, généralement à deux de ces coins, ou même au quatre coins selon la géométrie du vitrage. Le contre bombage correspond à une inversion non désirée de la courbure. Les feuilles de verre bombées obtenues ne répondent plus alors aux conditions imposées au vitrage pour pouvoir être monté dans une baie de carrosserie.

Pour remédier au contre-bombage, dans le cas du bombage d'une seule feuille de verre destinée à être trempée thermiquement et qui à cette fin est fortement chauffée, on a déjà proposé de maintenir les bords de ladite feuille pendant l'opération de bombage. Ce procédé n'est pas entièrement satisfaisant en particulier dans le cas du bombage de plusieurs feuilles de verre simultanément.

On connaît aussi d'après le document US-A 2 003 383, l'application de forces additionnelles sur la face supérieure de la feuille de verre du dessus, dans les coins, pour éviter le soulèvement de ces coins au cours du bombage. Mais la présence de ces organes agissant crée des contraintes thermiques qui sont la source de casses thermiques des feuilles de verre ou tout au moins d'une perte de la résistance mécanique desdites feuilles et des vitrages qui les utilisent.

L'invention pose le problème de l'homogénéisation de la température des feuilles de verre bombées et elle propose un procédé qui obvie aux inconvénients cités, permettant non seulement de supprimer le contre-bombage, notamment lors du bombage de deux feuilles de verre simultanément, mais d'obtenir en outre une homogénéité de la température des feuilles de verre bombées.

Selon l'invention, en plus des opérations usuelles utilisées pour le bombage sur cadre d'une feuille de verre ou d'un empilage de feuilles de verre par gravité, on applique durant le chauffage nécessaire au bombage, une force additionnelle à la force de gravité, sur la face supérieure de la feuille de verre du dessus aux emplacements sujets à un contre-bombage, généralement à proximité de deux ou des quatre coins de la feuille ou de l'empilage, cette force additionnelle étant appliquée par l'intermédiaire d'un organe agissant par contact, de préférence une roulette ou une molette, cette force additionnelle étant supprimée avant homogénéisation de la température du verre alors que la ou les feuilles de verre sont toujours disposées sur le cadre de bombage.

La force additionnelle est appliquée généralement en deux emplacements symétriques, à savoir à proximité de deux coins et à quelques centimètres du bord des feuilles de verre. Le cas échéant une force additionnelle est appliquée en quatre emplacements, à proximité des quatre coins.

Bien que le procédé s'applique en particulier au bombage simultané des deux feuilles de verre empilées, destinées à former un vitrage feuilleté, le procédé peut s'appliquer également avec avantage au bombage sur cadre d'une seule feuille de verre.

La force appliquée par la roulette reste perpendiculaire à la surface de la feuille et ce durant toute l'opération de bombage.

Pour éviter un glissement, au cours du bombage de la roulette, par rapport au point d'appui voulu, on utilise avanteusement une roulette à surface périphérique crantée ou une molette à dents en forme de pointe diamant par exemple.

Comme indiqué précédemment l'invention s'applique en particulier au bombage des feuilles de verre utilisées dans les vitrages feuilletés et surtout lorsque ces vitrages feuilletés sont des pare-brises destinées à être collés hors périphérie sur le cadre de la carrosserie du véhicule.

L'organe agissant peut-être en graphite. Dans ce cas, on évite tout marquage du verre. Mais il peut être aussi le cas échéant en un matériau plus dur, en acier inoxydable par exemple. Dans ce cas, il peut y avoir un marquage mais celui-ci n'est pas gênant lorsqu'il se situe est généralement le cas, et en particulier lorsque cette zone est primée pour le collage du vitrage.

Pour éviter de créer des surcharges et contraintes thermiques néfastes au bon déroulement de l'opération de bombage, on peut utiliser une roulette ou molette ayant une structure très ajourée.

Comme décrit précédemment, la force additionnelle et notamment le contact de l'organe agissant sont supprimés dès que le profil définitif de la ou des feuilles de verre est acquis. On peut ainsi mieux homogénéiser la température de la ou des feuilles de verre et améliorer ainsi la résistance mécanique du vitrage.

L'invention concerne aussi un dispositif pour le bombage sur cadre d'une feuille de verre ou de plusieurs feuilles de verre empilées.

Le dispositif selon l'invention pour le bombage sur cadre d'au moins une feuille de verre par gravité, comprend un cadre horizontal dont le profil détermine la courbure de la feuille de verre, un four de bombage comprenant une zone de préchauffage, une zone de bombage et une zone d'homogénéisation, des moyens agissant par contact appliquant une force additionnelle sur la face supérieure de la feuille de verre au cours du bombage, et en outre des moyens disposés à la fin de la zone de bombage, dans le four, pour retirer les moyens agissant de la surface de la feuille de verre.

Dans une réalisation du dispositif celui-ci comprend des moyens agissant par contact de part et d'autre de l'axe de symétrie du cadre.

Dans une réalisation avantageuse du dispositif, il est prévu des rampes qui, disposées le long du parcours du cadre sur la ligne de bombage, coopèrent avec des tiges appartenant aux systèmes montés sur le cadre afin d'amener les organes agissants des systèmes, automatiquement et progressivement en appui sur la feuille de verre, et ensuite de les retirer dès que le profil désiré est atteint.

L'organe agissant sur la feuille de verre est de préférence une roulette, en particulier une molette ce qui lui permet d'agir constamment de façon perpendiculaire à la feuille de verre à l'emplacement, où il est appliqué. La force supplémentaire peut bien entendu varier en fonction des feuilles de verre à bomber.

D'autres caractéristiques et avantages de l'invention apparaitront dans la description suivante d'un exemple de réalisation du dispositif selon l'invention.

Dans cet exemple de réalisation, il est prévu deux organes agissants sur la face supérieure de la ou des feuilles de verre, de façon symétrique par rapport au plan de symétrie du cadre.

La figure 1 est une représentation schématique d'une ou de deux feuilles de verre sur un cadre de bombage montrant l'action des organes agissant sur les coins de la face supérieure de la feuille de verre au cours de l'opération de bombage.

La figure 2 est une vue de dessus d'un côté de la feuille de verre sur le cadre dans le four de bombage.

La figure 3 est une vue de face de la feuille de verre sur son cadre dans le four de bombage de la figure 2.

La figure 4 représente une molette utilisée en tant qu'organe agissant sur la feuille de verre.

La figure 5 est une représentation schématique des moyens annexés assurant le basculement de l'organe agissant d'un côté du cadre, placés en amont du four de bombage.

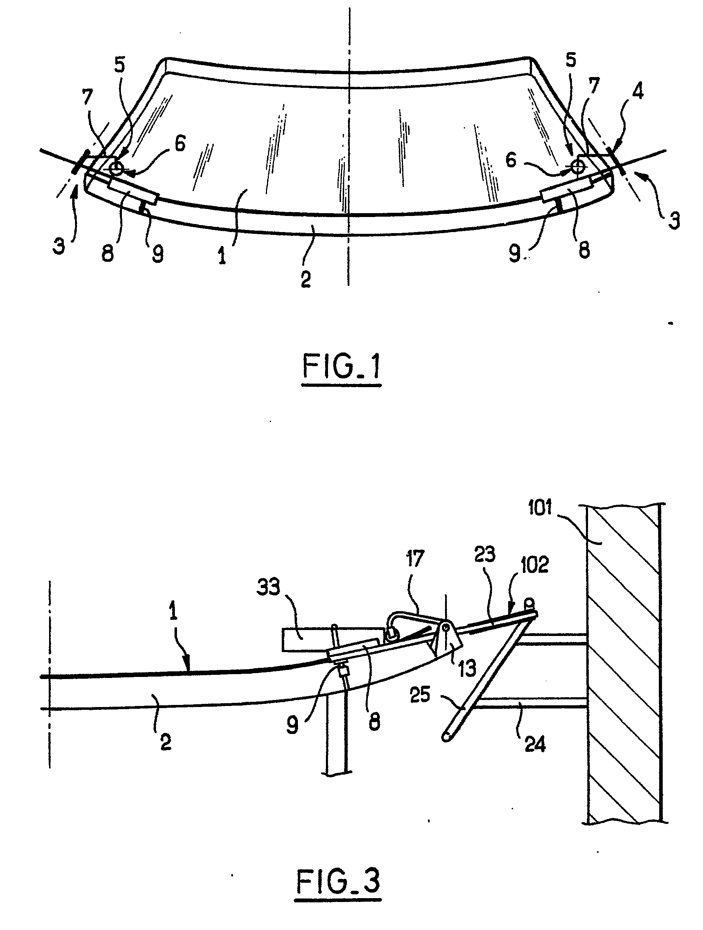

Sur la figure 1, la ou les feuilles de verre 1 sont disposées de manière connue sur un cadre de bombage 2, en position sensiblement horizontale. Sur les deux côtés latéraux du cadre, à proximité des deux coins du cadre correspondant à la base des feuilles de verre, utilisée dans un pare-brise de véhicule là moteur, sont montés des moyens 3 qui selon l'invention agissent sur les deux coins de la face supérieure de la feuille de verre. Ces moyens comprennent chacun un axe de pivotement 4 sensiblement horizontal autour duquel pivote un organe agissant 5 constitué ici d'une roulette 6 porté au bout d'un bras coudé 7, ainsi qu'un poids 8 constitué d'une barre métallique qui détermine la force agissante sur la feuille de verre pour le bombage ou plus exactement pour éviter le contre-bombage au cours du bombage par gravité de la ou des feuilles de verre. La force additionnelle agissante est ajustable d'une part, par le choix du poids 8, et d'autre part, par le longueur des bras de levier. Le cadre 2 est également muni de tige-butée 9 limitant le basculement du poids et par là de l'organe agissant jusqu'à la côte désirée.

Les moyens agissant sur la feuille de verre sont représentés dans leur position d'action au cours de l'opération de bombage.

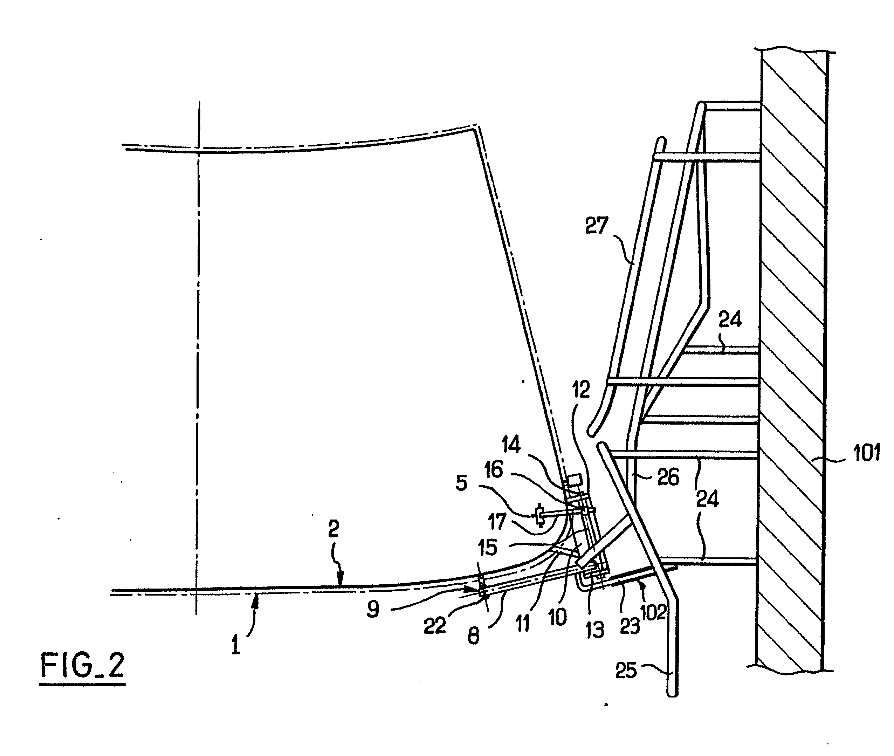

La figure 2 est une vue de dessus d'une partie du dispositif selon l'invention dans la partie finale de la zone du four de bombage où est effectuée le bombage des feuilles de verre qui viennent épouser le profil du cadre de bombage par gravité en étant chauffées à des températures de l'ordre de 600°C environ. La ou les feuilles de verre sont représentées sur la figure par un trait mixte.

Un côté seulement du dispositif selon l'invention est représenté sur la figure 2. L'autre côté est évidemment symétrique par rapport à l'axe du cadre de bombage.

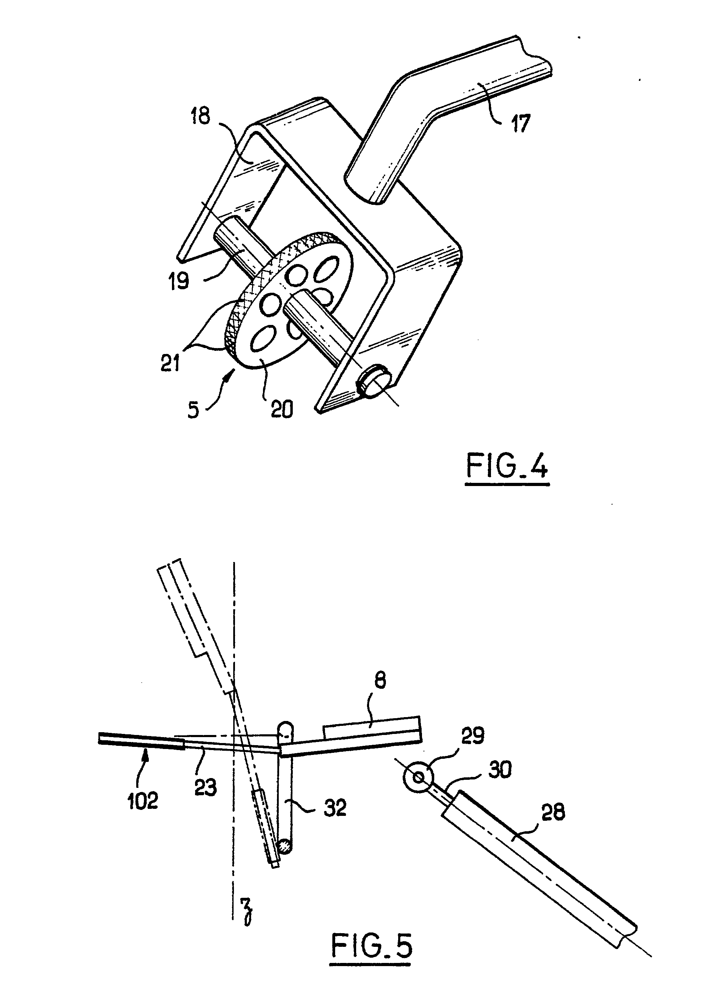

Une pièce support 10 est soudée au coin du cadre 2. Une barre 11 assure la fixation de la pièce support 10 sur le cadre 2. La pièce-support horizontale 10 porte à ses deux extrémités deux oreilles verticales 12, 13, dirigées vers le haut. Ses deux oreilles constituent le support d'un axe 14 autour duquel est monté librement en rotation un cylindre 15. Sur ce cylindre 15 est soudé un écrou 16 traversé par une tige filetée coudée 17 qui porte à ses extrémités l'organe agissant 5. Le montage de l'organe agissant représenté sur la figure 4 est assuré par un étrier 18 entre les flans duquel est monté un arbre 19. Sur cet arbre est monté solidaire en rotation une roulette 20. Cette roulette d'un diamètre d'environ 30 mm est par exemple en acier inoxydable. Sa périphérie est munie de dents 21, par exemple en forme de pointe diamant afin d'éviter un glissement non désiré de la roulette sur la feuille de verre, lorsque la roulette est en appui en position de travail. Le corps de la roulette est avantageusement ajourée pour les raisons d'homogénéisation des températures de la feuille de verre : on réduit ainsi leur zone de chauffe trop importante dûe à la matière même de la roulette qui a tendance à s'échauffer plus que la feuille de verre.

Sur le cylindre 15 est également soudée une barre cylindrique 8 qui sert de poids pour l'action de la roulette et qui, à cet effet, est montée du même côté que la tige filetée portant la roulette. Le poids constitué par exemple d'un ou plusieurs cylindres pleins en acier inoxydable s'étend à l'extérieur de la périphérie du cadre. Au voisinage de son extrémité il porte une pièce rapportée ronde 22 qui est susceptible de venir au contact de la tige-butée 9 qui est montée sur le cadre, lorsque la courbure finale de la feuille de verre est obtenue. Cette tige-butée 9 évitant d'aller au-delà de la courbure désirée.

Sur la barre cylindrique 8 est soudée une tige 23 qui s'étend dans la direction opposée à celle du cadre et qui est utilisée pour la mise en place de l'organe agissant sur la feuille de verre à l'entrée du four de bombage et pour son retrait à la fin de la zone de bombage.

En effet, il est prévu dans cet exemple de réalisation, à l'entrée du four, d'une part, et dans la zone intermédiaire du four de bombage, entre la zone de bombage et la zone d'homogénéisation, d'autre part, des rampes sur lesquelles la tige munie d'un manchon cylindrique 102 tournant librement, prend appui pour abaisser lentement la roulette au contact du verre ou pour l'en écarter.

Sur la figure 2 sont représentées les rampes utilisées pour le retrait de l'organe agissant de la surface de la feuille de verre, dans le four de bombage dans la zone qui suit le bombage proprement dit, fixées à la paroi 101 du four par l'intermédiaire de tiges réglables en longueur 24.

Ces rampes au nombre de trois, par exemple, sont disposées, la première 25, de façon à ce que l'extrémité de la tige 23 prolongeant le poids en prenant appui contre elle et sous elle passe d'une position sensiblement horizontale, à une position qui a sensiblement dépassé la verticale au fur et à mesure de l'avancement du cadre dans le four. A cet effet la rampe 25 présente donc une pente négative, c'est à dire que sa partie avale est à un niveau inférieur à celui de la partie amont. Les deux rampes 26, 27 disposées plus en aval sont destinées à maintenir la tige 23 en position sensiblement verticale durant la suite du parcours du cadre dans le four de bombage pour éviter d'une part que l'ensemble pivotant et en particulier, la roulette 20 tombe sur le verre et d'autre part que l'ensemble pivotant en particulier le poids 8 retombe sur les résistances chauffantes équipant les parois 101 du four de bombage.

Sur la figure 3, qui correspond à une vue en élévation du cadre dans le four est représentée la rampe 24 sur laquelle la tige arrière va prendre appui.

Il est prévu avantageusement d'incurver l'extrémité amont 28 de la rampe vers l'intérieur du four. On évite ainsi tout risque de chute de l'ensemble pivotant sur les résistances lors d'une marche arrière qui le cas échéant peut être nécessaire.

A l'entrée du four de bombage, il est prévu des moyens pour la mise en place de l'organe agissant sur les coins de la feuille de verre. Ces moyens, représentés schématiquement et partiellement sur la figure 5 comprennent un vérin 29 dont la tête 30 montée au bout de la tige 31 vient soulever l'ensemble pivotant comprenant l'organe agissant 5 (non représenté), et le poids 8 en prenant appui sous l'extrémité du poids 8. L'ensemble pivotant est ainsi amené à une position qui a sensiblement dépassée la position verticale, matérialisée par l'axe z, l'ensemble ayant tendance à basculer du côté du cadre. Ce basculement est bloqué par une rampe 32 dont le profil est déterminé pour amener progressivement l'organe agissant sur le verre au fur et à mesure que le cadre avance vers la zone de bombage, le contact étant généralement établi avant le chauffage précédent ledit bombage.

Le dispositif fonctionne de la manière suivante:

Le cadre de bombage maintenu suspendu au bout de potences 33 (représentée sur la figure 3), portées par un chariot circulant sur des rails et assurant le transport du cadre dans le four de bombage, arrive au poste de chargement des deux feuilles de verre planes empilées, destinées à former un vitrage feuilleté. A ce moment, l'ensemble pivotant est en position écarté, c'est à dire que l'organe agissant 5 et le poids 8 sont dirigés vers l'extérieur par rapport au cadre, et cela pour chacun des deux côtés latéraux du cadre.

Le cadre chargé des deux feuilles de verre arrive, au pas suivant, au poste où le verin 29 par l'intermédiaire de sa tête 30 va soulever l'ensemble pivotant pour venir appliquer la tige 23 contre la rampe fixe 32. Le cadre est ensuite entrainé vers l'entrée du four de bombage. Durant ce parcours, de chaque côté du cadre, l'ensemble pivotant pivote progressivement grâce au profil de la rampe 32 sur laquelle roule le manchon 102 de la tige 23, jusqu'à ce que la roulette 20 arrive au contact de la face supérieure de la feuille de verre 1. A ce moment, la roulette appuie sur la feuille de verre avec une force liée au poids 8. Le cadre 2 pénètre dans le four de bombage et passe d'abord dans la zone de préchauffage où le verre est amené à une température de l'ordre de 500°C puis dans la zone de bombage où le verre est amené à une température d'environ 600°C.

A ce moment, les feuilles de verre ramollies prennent progressivement le profil du cadre par gravité et la roulette 20 sous l'action du poids 8 empêche tout contre-bombage et ce aux deux emplacements de contact. Lorsque le profil désiré est atteint, la pièce rapportée 22 sur le poids est en appui contre la tige-butée 9 montée sur le cadre.

La roulette est ensuite écartée du verre pour permettre une meilleure homogénéisation de la ou des feuilles de verre dans la zone d'homogénéisation qui suit le bombage. A cette fin, le cadre arrive à l'emplacement de la rampe 25 et la tige 23, venant au contact de cette rampe et suivant son profil par le biais de son manchon 102 est abaissée ce qui provoque le pivotement de l'ensemble pivotant et le retrait de la molette de la face du verre. L'ensemble pivotant pivote jusqu'à une position qui a dépassé la verticale pour venir au contact de la rampe 26 qui l'empêche de tomber sur la paroi du four et les résistances électriques disposées dans cette zone, puis plus loin, le poids arrive au passage entre cette rampe 26 et la rampe 27 qui a pour fonction d'éviter un basculement accidentel de l'ensemble pivotant vers le cadre. Puis par appui contre la partie finale de la rampe 26, l'ensemble pivotant s'écarte totalement du cadre.

A la sortie du four de bombage, l'ensemble pivotant est en position écarté par rapport au cadre et les feuilles de verre bombées peuvent être retirées du cadre.

**Revendications**

1. Procédé pour le bombage sur cadre d'au moins une feuille de verre (1) par gravité au cours duquel la ou les feuilles de verre empilées, disposées sur un cadre de bombage horizontal (2), sont élevées à la température de déformation et viennent épouser le profil du cadre de bombage par effet de gravité, et dans lequel on applique durant le chauffage provoquant le bombage, une force additionnelle sur la face supérieure de la feuille de verre du dessus à chacun des emplacements sujets à un contre-bombage, la force étant appliquée par contact d'un organe agissant sur le verre, notamment d'une roulette ou d'une molette liée à un poids déterminant la force additionnelle, caractérisé en ce que l'organe agissant est retiré de la surface du verre dès que le profil désiré est atteint et en ce qu'on homogénéise ensuite la température du verre, alors que la ou les feuilles de verre sont toujours disposées sur le cadre de bombage.

2. Procédé selon la revendication 1, caractérisé en ce qu'une force additionnelle est appliquée symétriquement par rapport à l'axe des feuilles de verre, à proximité de chacun des deux coins ou des quatre coins des feuilles de verre.

3. Dispositif pour le bombage sur cadre d'au moins une feuille de verre par gravité, comprenant un cadre horizontal (2) dont le profil détermine la courbure de la feuille de verre (1), un four de bombage comprenant une zone de préchauffage, une zone de bombage et une zone d'homogénéisation, des moyens agissant par contact (5) appliquant une force additionnelle sur la face supérieure de la feuille de verre au cours du bombage, caractérisé en ce qu'il comprend en outre des moyens (25) disposés à la fin de la zone de bombage, dans le four, pour retirer les moyens agissant (5) de la surface de la feuille de verre.

4. Dispositif selon la revendication 3, caractérisé en ce qu'il comprend des moyens agissant de part et d'autre de l'axe de symétrie du cadre.

5. Dispositif selon la revendication 3 ou 4, caractérisé en ce que les moyens agissant sur la face supérieure de la feuille de verre comprennent une roulette (20) ou molette et un poids (8) déterminant la force additionnelle, l'ensemble étant pivotant sur un axe sensiblement horizontal, fixé au cadre de bombage (2).

6. Dispositif selon une des revendications 3 à 5, caractérisé en ce qu'il comprend des rampes (32, 25, 26, 27) qui sont disposées le long du parcours du cadre sur la ligne de bombage, coopèrent avec des tiges (23) appartenant aux systèmes des organes agissants afin d'amener les organes agissants des systèmes montés sur le cadre, automatiquement et progressivement en appui sur la feuille de verre et ensuite de les retirer de la surface du verre dès que le profil désiré est atteint.

7. Dispositif selon la revendication 6, caractérisé en ce qu'il comprend une rampe (32) en amont du four de bombage et un ensemble de rampes (25, 26, 27) dans la partie du four qui suit la zone de bombage.

8. Dispositif selon la revendication 7, caractérisé en ce qu'il comprend un vérin (29) amenant la tige (23) en appui contre la première rampe (32).

9. Dispositif selon une des revendications 5 à 8, caractérisé en ce que des tiges-butées (9) sont montées sur le cadre pour limiter l'action des moyens agissants, juste au profil désiré.

10. Dispositif selon une des revendications 5 à 9, caractérisé en ce que la roulette ou molette est ajourée.

**Claims**

1. A method of bending, on a frame, at least one sheet of glass (1) by gravity, during which the sheet or stacked sheets of glass, disposed on a horizontal bending frame (2), are raised to the deformation temperature and bend to hug the profile of the bending frame under the effect of gravity, and in which, during the heating causing bending, an additional force is applied onto the upper face of the glass sheet from above at each of the locations subject to a reverse bending, the force being applied by contact of an active element on the glass, notably a roller or a wheel linked to a weight determining the additional force, characterized in that the active element is withdrawn from the surface of the glass as soon as the desired profile has been reached and in that the temperature of the glass is subsequently homogenized while the sheet or sheets of glass are still disposed on the bending frame.

2. A method according to Claim 1, characterized in that an additional force is applied symmetrically with respect to the axis of the glass sheets, in the proximity of each of the two corners or four corners of the glass sheets.

3. Apparatus for the bending, on a frame, of at least one sheet of glass by gravity, comprising a horizontal frame (2), the profile of which determines the curvature of the glass sheet (1), a bending furnace comprising a preheating zone, a bending zone and a homogenization zone, means acting by contact (5) applying an additional force onto the upper face of the glass sheet during the bending, characterized in that the apparatus comprises, in addition, means (25) disposed at the end of the bending zone, in the furnace, for withdrawing the active means (5) from the surface of the glass sheet.

4. Apparatus according to Claim 3, characterized in that it comprises active means on either side of the axis of symmetry of the frame.

5. Apparatus according to Claim 3 or 4, characterized in that the means active on the upper face of the glass sheet comprise a roller (20) or wheel and a weight (8) determining the additional force, the assembly being pivotal about a substantially horizontal axis fixed to the bending frame (2).

6. Apparatus according to one of Claims 3 to 5, characterized in that it comprises ramps (32, 25, 26, 27) which, disposed along the path of the frame along the bending line, cooperate with rods (23) forming part of the systems of the active elements in order to bring the active elements of the systems mounted on the frame, automatically and progressively, into bearing against the glass sheet and subsequently to withdraw them from the surface of the glass as soon as the desired profile is reached.

7. Apparatus according to Claim 6, characterized in that it comprises a ramp (32) upstream of the bending furnace and an assembly of ramps (25, 26, 27) in the part of the furnace which follows the bending zone.

8. Apparatus according to Claim 7, characterized in that it comprises a jack (29) bringing the rod (23) into bearing against the first ramp (32).

9. Apparatus according to one of Claims 5 to 8, characterized in that stop rods (9) are mounted on the frame for limiting the action of the active means just to the profile desired.

10. Apparatus according to one of Claims 5 to 9, characterized in that the roller or wheel has apertures.

**Patentansprüche**

1. Verfahren zum Biegen wenigstens einer Glasscheibe (1) auf einem Rahmen durch Schwerkraft, im Verlaufe dessen die Glasscheibe oder die gestapelten Glasscheiben, die auf einem horizontalen Biegerahmen (2) angeordnet sind, auf den Erweichungspunkt gebracht werden und sich durch die Einwirkung der Schwerkraft an das Profil des Biegerahmens anschmiegen, und bei dem während der die Biegung auslösenden Erwärmung eine zusätzliche Kraft von oben auf die Oberfläche der Glasscheibe jeweils an den Stellen angewendet wird, die für eine Gegenbiegung anfällig sind, wobei die Kraft durch Berührung eines auf die Glasscheibe einwirkenden Organes, insbesondere einer Rolle oder eines Rädchens, die mit einem die zusätzliche Kraft bestimmenden Gewicht verbunden sind, angewendet wird, dadurch gekennzeichnet, daß das einwirkende Organ von der Oberfläche des Glases zurückgezogen wird, sobald das erwünschte Profil erzielt ist, und daß anschließend die Temperatur des Glases homogenisiert wird, während die Glasscheibe oder Glasscheiben immer noch auf dem Biegerahmen angeordnet sind.

2. Verfahren nach Anspruch 1, dadurch gekennzeichnet, daß eine zusätzliche Kraft symmetrisch bezüglich der Achse der Glasscheiben angewendet wird, in der Nähe jeder der beiden Ecken oder der vier Ecken der Glasscheiben.

3. Vorrichtung zum Biegen wenigstens einer Glasscheibe auf einem Rahmen durch Schwerkraft, umfassend einen horizontalen Rahmen (2), durch dessen Profil die Krümmung der Glasscheibe (1) bestimmt wird, einen Biegeofen mit einer Vorheizzone, einer Biegezone und einer Homogenisierzone, Einrichtungen (5), die durch Berührung wirken und während des Biegens eine zusätzliche Kraft auf die Oberfläche der Glasscheibe anwenden, dadurch gekennzeichnet, daß sie ferner Einrichtungen (25) aufweist, die am Ende der Biegezone in dem Biegeofen angeordnet sind, um die Einrichtungen (5) von der Oberfläche der Glasscheibe zurückzuziehen.

4. Vorrichtung nach Anspruch 3, dadurch gekennzeichnet, daß sie Einrichtungen aufweist, die beiderseits der Symmetrieachse des Rahmens wirken.

5. Vorrichtung nach Anspruch 3 oder 4, dadurch gekennzeichnet, daß die auf die Oberfläche der Glasscheibe einwirkenden Einrichtungen eine Rolle (20) oder ein Rädchen und ein die zusätzliche Kraft bestimmendes Gewicht (8) umfassen, wobei das Ganze um eine im wesentlichen horizontale, an dem Biegerahmen (2) befestigte Achse schwenkbar ist.

6. Vorrichtung nach einem der Ansprüche 3 bis 5, dadurch gekennzeichnet, daß sie Rampen (32, 25, 26, 27) aufweist, die längs des Rahmens auf der Biegestrecke angeordnet sind und mit Stangen (23) zusammenwirken, die zu den Systemen der einwirkenden Organe gehören, um die einwirkenden Organe der auf dem Rahmen montierten Systeme automatisch und fortschreitend auf die Glasscheibe abgestützt zu führen und sie anschließend von der Glasoberfläche zurückzuziehen, sobald das erwünschte Profil erzielt ist.

7. Vorrichtung nach Anspruch 6, dadurch gekennzeichnet, daß sie eine vor dem Biegeofen angeordnete Rampe (32) sowie eine Anzahl von Rampen (25, 26, 27) in dem Teil des Ofens, der auf die Biegezone folgt, aufweist.

8. Vorrichtung nach Anspruch 7, dadurch gekennzeichnet, daß sie einen Zylinder (29), der eine Stange (23) gegen die erste Rampe (32) andrückt, aufweist.

9. Vorrichtung nach einem der Ansprüche 5 bis 8, dadurch gekennzeichnet, daß Anschlageinrichtungen (9) für die Stangen an dem Rahmen angeordnet sind, um das Wirken der einwirkenden Einrichtungen genau bis auf das gewünschte Profil zu begrenzen.

10. Vorrichtung nach einem der Ansprüche 5 bis 9, dadurch gekennzeichnet, daß die Rolle oder das Rädchen gelocht ist.

FIG.1

FIG.3

FIG_2

EP 0 250 311 B1

FIG.4

FIG.5